# EUROPEAN PATENT APPLICATION

(11) **EP 1 585 356 A1**
(43) Date of publication of application: **12.10.2005**
(21) Application number: 04290970.5
(22) Date of filing: 09.04.2004
(51) Int. Cl.: H04Q 7/38, H04L 12/56

(54) **Multi-user services control information transfer**

(71) Applicant: MOTOROLA INC., Schaumburg, IL 60196 (US)
(72) Inventor: Harrison, Mark, Grapevine, TX 76051 (US); Ahmed, Mansoor, Forth worth, TX 76137 (US); Al-Bakri, Ban, 06160 Juan Les Pins (FR); CAI, Zhijun, TX 76180 (US)
(74) Representative: Openshaw, Paul Malcolm

(57) **Abstract**

A fixed network (104) of a radio communication system (100) sets one or more designated bits (515) within a protocol portion (210,211,215,410) that is one of a protocol overhead of a multi-user traffic channel (MTCH) being received by a user equipment (UE) (102), a control portion of a physical channel (205) carrying the MTCH, and an indicator of a paging channel (405) into a bit pattern that provides an indication that new multi-user service control information (231) will be transmitted on a multi-user control channel (MCCH) that affects a multi-user service being received by the UE on the MTCH. The bit pattern may further indicate a delay (236) before the new multi-user service control information will be transmitted. The designated bits (515) may be inserted near the end of each unencoded data frame (501) or may be inserted near the end of each pre-coded data frame (625) and each interleaved pre-coded data frame (655).

## Description

### Field of the Invention

The present invention is a method used in a radio communication system, and more particularly is a method used for multi-user services that are broadcast in a radio communication system.

### Background

Third generation (3G) cellular systems are now being installed and tested around the world. These 3G systems provide higher data throughput than older systems, and new services are practical in 3G systems that have not been practical in older systems. One of these services is streaming multimedia (i.e., streaming audio & video). Streaming multimedia service that is broadcast on one traffic channel and made available to many users simultaneously is under development. In the working groups (the 3G Partnership Projects - 3GPP) for one class of systems (commonly called the W-CDMA systems, wherein W-CDMA refers to both the frequency division duplex and time division duplex modes of operation), there is a working group for multimedia broadcast/multicast services (MBMS) that has established some of the definitions for an MBMS traffic channel (MTCH) on which to transmit MBMS traffic simultaneously to a plurality of user equipments (UEs), and some of the definitions for an MBMS control channel (MCCH). The MCCH is designed to carry control information that affects the service on the MTCH. For example, the control information may affect how the MTCH is transmitted (format, physical channel, etc), or may have more general control (MBMS data start/stop, ciphering, etc). This multimedia service control information may change while a particular multimedia event is streaming, necessitating communication to the UEs while they are currently receiving the traffic that new multimedia service control information is being made available. However, techniques for informing the UE about the existence of the new multimedia services control information and for the UE acquiring the new multimedia services control information in 3GPP defined systems have not been developed.

### Brief Description of the Drawings

The present invention is illustrated by way of example and not limitation in the accompanying figures, in which like references indicate similar elements, and in which:
**FIG. 1** is a system diagram of a radio communication system, in accordance with some embodiments of the present invention;
**FIG. 2** shows a timing diagram of downlink channels as they are being received by a user equipment in the radio communication system, in accordance with some embodiments of the present invention;
**FIG. 3** shows a flow chart of a method used in the radio communication system, in accordance with some embodiments of the present invention;
**FIG. 4** shows a timing diagram of downlink channels as they are being received by a user equipment in the radio communication system, in accordance with some embodiments of the present invention;
**FIG. 5** shows a block diagram of a data frame coding function, in accordance with some embodiments of the present invention;
**FIG. 6** shows a block diagram of a data frame coding function, in accordance with some embodiments of the present invention; and
**FIG. 7** shows a flow diagram of encoding/decoding, in accordance with some embodiments of the present invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### Detailed Description of the Drawings

Before describing in detail the particular multi-user services control information acquisition in accordance with the present invention, it should be observed that the present invention resides primarily in combinations of method steps and apparatus components related to radio communication systems. Accordingly, the apparatus components and method steps have been represented where appropriate by conventional symbols in the drawings, showing only those specific details that are pertinent to understanding the present invention so as not to obscure the disclosure with details that will be readily apparent to those of ordinary skill in the art having the benefit of the description herein.

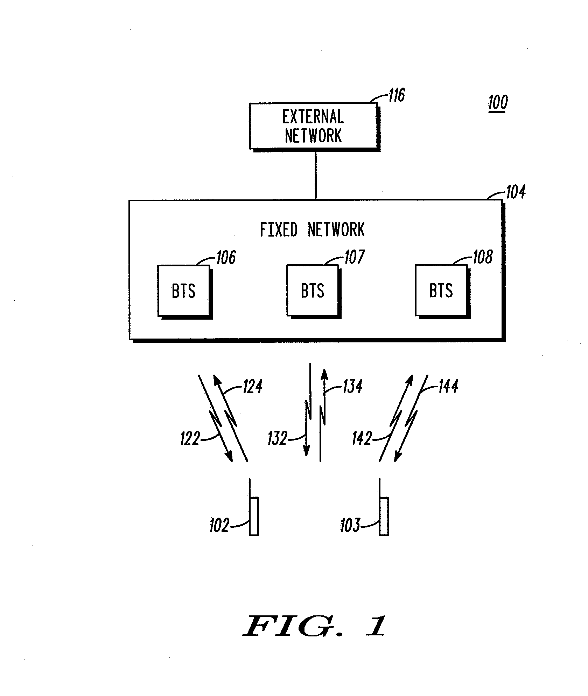

Referring to **FIG. 1**, a system diagram of a radio communication system **100** is shown, in accordance with embodiments of the present invention. The radio communication system **100** comprises a fixed network **104** coupled to an external network **116**, such as the internet, or a public or private telephone network, and one or more user equipments **102**, **103**, of which two are shown. The fixed network **104** comprises one or more base transceiver stations, also referred to as Node Bs in 3GPP, but hereinafter referred to as "BTSs"**106**, **107**, **108**, of which three are shown. The three shown in **FIG. 1** represent three base stations in three adjacent cells of the communication system **100**. The fixed network **104** further comprises at least one radio network controller (not shown) and may comprise a variety of controllers, such as broadcast-multicast service centers, gateway GPRS serving nodes, serving GPRS serving nodes, central base station controllers, base station controllers, packet controllers, and the like. The fixed network, base stations, and UEs may comprise conventional hardware, the functioning of which is modified by programming instructions that control processors therein to perform the unique functions described herein. Alternatively, unique hardware could be fabricated, such as non-programmable state machines comprising logic and memory cells that are uniquely intercoupled, to specifically perform the unique functions described herein.

The base transceiver stations **106-108**, which are hereafter referred to simply as base stations, are linked to the UEs by radio signals, which are generally indicated in **FIG. 1** as uplinks **124, 134, 144** and downlinks **122, 132** and **142**. As is known for 3G systems such as W-CDMA and CDMA2000, each of the uplinks and downlinks may comprise a plurality of physical channels and logical channels. Generally speaking, a physical channel may contain one or more logical channels. A logical channel might in some circumstances occupy essentially the entire physical channel. As is well known, in some communication systems **100,** information may be conveyed to a UE **102, 103** from more than one base station **106-108** simultaneously. This allows for error correction to be performed using multiple copies of the received information and also allows for seamless handoff as the UE moves from a location in one cell to a location in another cell.

As noted herein above, definitions and protocols for the transmission of multimedia services from the fixed network **116** to the UEs **102, 103** are in the process of being formulated for the purposes of broadcasting and multicasting one multimedia service simultaneously to a plurality of UEs in at least the W-CDMA types of systems. Initially, a set of available multi-user services and associated traffic channels are identified to a UE **102, 103**, so that the operator of the UE may select (if there is more than one service available) and accept a multi-user service. Upon acceptance, the UE **102, 103**, then enables reception of the multi-user traffic on the identified MTCH. Changes in the services being conveyed by the MTCH or changes in the nature of the logical or physical channel characteristics of the MTCH may then arise while a UE is receiving a multimedia service. These changes may be conveyed by control information. For example, the control information may affect how the MTCH is transmitted (format, physical channel, etc), or may have more general control (MBMS data start/stop, ciphering, etc). It is advantageous to be able to convey this new multi-user service control information reliably, but by using minimum resources of the UE and without causing interruption of the multimedia service. Several unique techniques for accomplishing this acquisition of new multi-user service control information are described herein, in accordance with some embodiments of the present invention.

Similar issues may exist in other radio communication systems and the issues may pertain to services other than 3GPP, so hereafter in this document, the term multi-user services will be used to describe what is defined as MBMS for W-CDMA systems. The names used for the traffic channel and control information channel will be "multi-user traffic channel" and "multi-user control channel", but the acronyms used for the traffic channel and control information channel will remain as MTCH and MCCH, and be understood to pertain to similar channels in any radio communication system. 3GPP terminology and architecture are used to describe the invention. 3GPP terminology is described in 3GPP TS 21.905, "Technical Specification Group Services and System Aspects; Vocabulary for 3GPP Specifications", and 3GPP Technical Specification 25.201, "Technical Specification Group Radio Access Network; Physical layer - General description" has an overview of the radio interface protocol architecture.

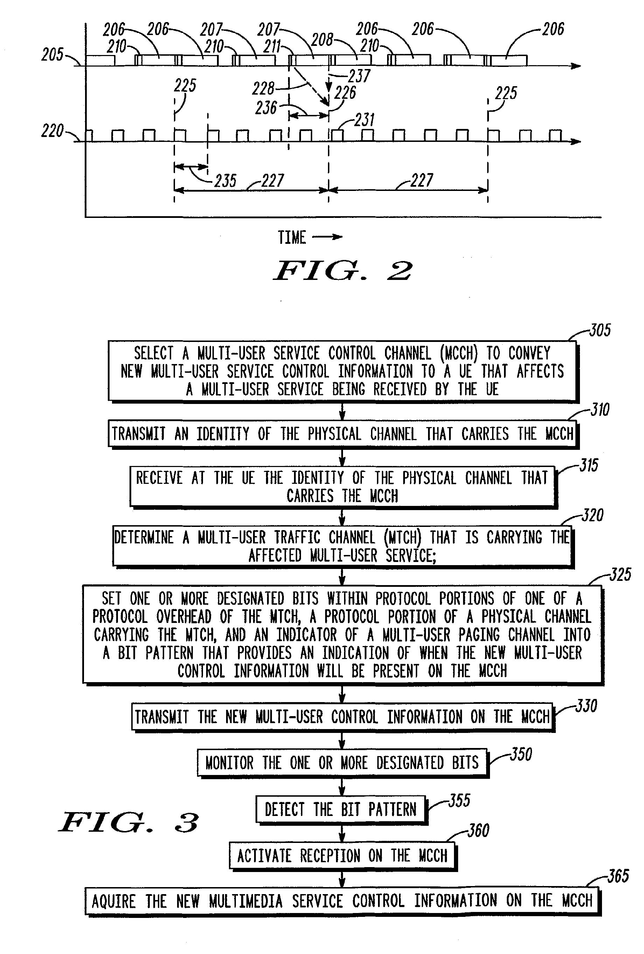

Referring to **FIGS. 2** and **3**, a timing diagram of **FIG. 2** shows downlink channels as they are being received by UE **102**, and a flow chart of **FIG. 3** shows a method used in the communication system **100** to facilitate acquisition of new multi-user service control information by a user equipment, in accordance with some embodiments of the present invention. UE **102** is receiving a multi-user service from the external network **116** via a first physical channel **205** of the fixed network **104** transmitted by base station **106**. Data frames **206, 207, 208** convey information on the physical channel **205**, of which at least two data frames **207** convey the multi-user service to the UE **102** in a multi-user traffic channel (MTCH) (a logical channel on the physical channel **205**). The other data frames shown in the physical channel **205**, including the data frames **206**, **208** may form a part of the MTCH or may be a part of other logical channels, which may include other MTCH channels. Each data frame in the physical channel **205** (and therefore each data frame in the logical channels of the physical channel **205**) preferably includes a protocol portion that in conventional radio communication systems is a header at the medium access control (MAC) network layer, referred in some systems simply as a MAC header. The 3GPP MAC layer is specified in 3GPP Technical Specification 25.321, "Technical Specification Group Radio Access Network; Medium Access Control (MAC) protocol specification". The fixed network **104** determines that new multi-user service control information that affects the multi-user service is needed to be conveyed to UEs, including UE **102**, that are receiving the multi-user service. This determination may be made internally within the fixed network **116,** such as a change in the characteristics of the physical channel **205** (i.e., a slower but more robust throughput rate), or may be due to information received from the external network **116**, such as the start or cessation of a service, change of ciphering keys, charging information, etc.. The fixed network **104** determines a physical channel for a multi-user control channel (MCCH) to convey the new multi-user service control information to the UE **102.** The physical channel of the MCCH is not necessarily the same as the physical channel of the MTCH. The MCCH may be a logical channel of a physical channel; i.e., a physical and logical channel combination carries the MCCH. Therefore it may be said that new control information for a plurality of MTCHs may be carried simultaneously. For the purposes of the rest of this description, reference will be made to identifying, selecting, determining, etc. "the MCCH", but it will be appreciated that "the physical and logical channel combination that carries the MCCH" may be substituted in virtually all instances. At step **305** of **FIG. 3**, determination of the MCCH may be made by commands received from, for example, a controller in the fixed network **104** that selects the physical channel for the MCCH from those available at the time. At step **310** of **FIG. 3**, the base station **106** transmits an identity of the MCCH in a signaling message. In some embodiments, the MCCH may be selected and identified to the UE at the time the multimedia service is initially identified to the UE **102.** In some embodiments, the UE **102** could determine the identity of the MCCH from a table stored within the UE **102**, or by a defined algorithm that is stored within the UE **102**. The storage of such tables or algorithms into the UE **102** could occur, in some cases, when the UE **102** is fabricated, or by over the air programming. When such storage is, for example, done at the time of fabrication, then steps **305** and **310** would not be performed and step **315** includes the action that occurs.

The fixed network determines at step **320** which MTCH, among the MTCH's that have been identified for carrying multi-user service traffic, is the MTCH that is carrying the multi-user service traffic that is affected by the new multi-user service control information.

At step **325** of **FIG. 3**, in some embodiments of the present invention, one or more bits that are located in each data frame, that have been uniquely designated in accordance with present invention, are set by the fixed network **116** into a bit pattern that provides an indication to the UE **102** that new multi-user service control information will be present on a multi-user control channel (MCCH) that will convey the new multi-user service control information to the UE **102.** In these embodiments, the designated bits are described as being in a "protocol portion" that is a protocol overhead of the MTCH (i.e., a protocol overhead of the MTCH logical channel). These embodiments are described in more detail below. Step **325** also describes other protocol portions of channels related to the MTCH where bits may be designated in accordance with other embodiments of the present invention, for the same purpose. These other protocol portions are a control portion of a physical channel and an indicator of a multi-user paging channel. These embodiments are described in more detail below. The designated bits are then transmitted by the base station **106**, which are illustrated for the embodiment described as "the protocol overhead of the MTCH" by portions **210**, **211** of the data frames **207**, **208** shown in **FIG. 2.** The designated bits would be defined in the same location in all data frames **206, 207, 208.** Although the locations of the designated bits are shown in data frames **207** near the leading edge of the data frames, they may be located elsewhere in the data frames, as described in more detail below.

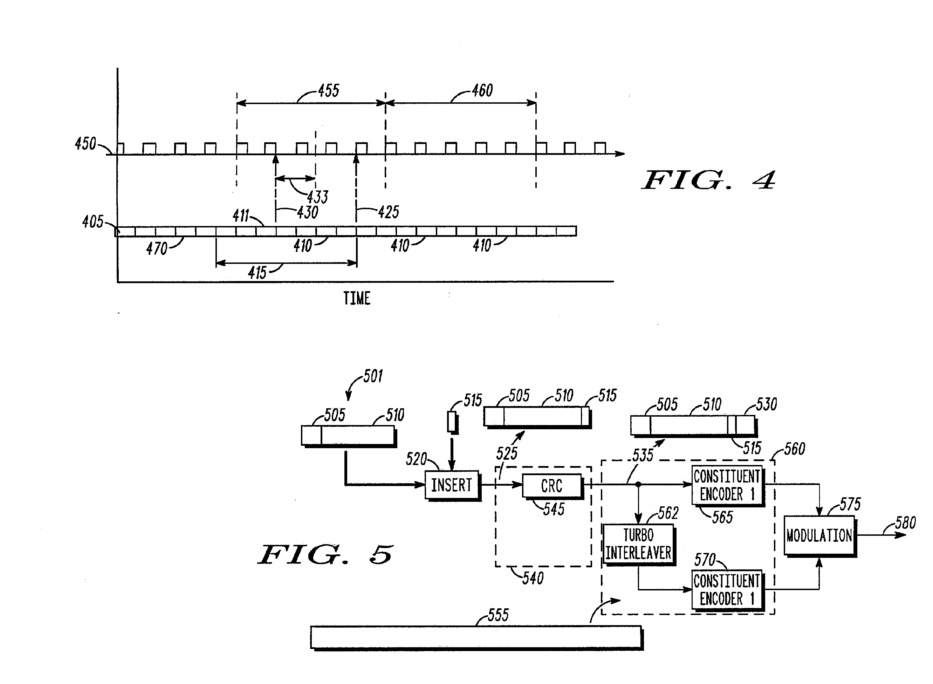

The base station **106** then transmits, at step **330** of **FIG. 4**, the new multi-user service control information on the MCCH at a time according to the particular embodiments described herein. The UE **102**, while receiving the multimedia service on the MTCH, performs monitoring for the designated bits at step **350**, using a technique that corresponds to the protocol portion in which the designated bits are located. These techniques are described in more detail below. When the UE **102** detects the bit pattern at step **355**, the UE **102** then activates reception at step **360** on the MCCH at a time according particular embodiments, as further described herein. This allows the UE **102** to acquire the new multi-user service control information at step **365.** In some embodiments, the UE **102** maintains reception for a predetermined minimum duration to assure acquisition of all of the new multi-user service control information.

The designated bits in some of the embodiments are a part of a set of bits within the data frame that include the conventional MAC header bits. In these embodiments, the set of bits that includes the conventional header and the designated bits of the present invention are called MAC overhead bits, for reasons that are described in more detail below.

Referring back to **FIG. 2**, in a first embodiment in which a protocol overhead of the MTCH is used to indicate that new multi-user service control information will be present on the MCCH, the protocol overhead of the MTCH includes a medium access layer (MAC) header and the designated bits. The designated bits may be located within or adjacent to the conventionally defined location of the MAC header, which in **FIG. 2** is shown near the leading end of the data frames **206, 207, 208**, (the left end in **FIG. 2**) in which case the protocol overhead is represented by the bit groups **210, 211.** In other embodiments, the designated bits may be located elsewhere, such as near or at the trailing end of the data frames. In these embodiments, the protocol overhead of the MTCH may include conventional MAC header bits near the leading edge of each data frame and the designated bits near the trialing edge of each data frame. According to some embodiments of the present invention, a plurality of potential start times **225, 226** for different sets of new multi-user service control information have been already identified to the UE **102**. The potential start times **225, 226** occur periodically with a new multi-user service control information period **227**, or they may have another defined start time schedule, or there may possibly be only one potential start time defined; i.e., in the middle of a short multi-cast service. In variations of the first embodiment that have a defined repetition schedule for the new multi-user service control information, a plurality of occurrences of a particular new multi-user service control information may occur with a repetition period **235** after each potential start time. **FIG. 2** illustrates periodic repetitions of the new multi-user service control information **231**. Techniques such at those described above for identifying the MCCH to UE **102** may be used for identifying the plurality of potential start times **225, 226,** including storage of tables or algorithms, or conveyance by a message transmitted from the fixed network **104**. When the bit pattern referred to in the description of step **325** above is detected by the UE **102**, the UE **102** activates reception on the MCCH near the next potential start time **226**. The description "near the next potential start time" means that the enablement may occur prior to the next start time, but typically should not be so early as to capture a previous set of information on the MCCH that pertains to other control information, and may occur after the start time by as much as will allow recovery of the new multi-user service control information. A longer delay by the UE **102** may be appropriate when resources of the UE 102 are temporarily being used for higher priority tasks. The designated bits may be repeated a predetermined number of times and the UE **102** may include a function for monitoring a predetermined number of repetitions of the one or more designated bits to acquire a predetermined number of repetitions of the bit pattern (that may include bit errors) from which to generate a reliable detection of the bit pattern, using conventional error detection/correction techniques for data that is repeated. Thus, in **FIG.2,** activation of monitoring of the MCCH occurs in response to (as indicated by arrow **228**) a final repetition of a protocol overhead of the MTCH **211** that includes a bit pattern that indicates that new multi-user service control information will be transmitted on the MCCH at the next start time. Other information could of course occur on the physical channel **220** between repetitions of the new multi-user service control information **231** if the entire physical channel is not dedicated only to the MCCH. It will be appreciated that in this first embodiment in which a protocol overhead of the MTCH is used to indicate that new multi-user service control information will be present on the MCCH, the one or more designated bits may consist of one bit, and the bit pattern is then a designated state of the bit, and the activation by the UE **102** of reception on the MCCH is performed after the designated state is detected, because the UE **102** has the information about the potential start times of the new multi-user service control information. This embodiment is therefore quite efficient in terms of the number of designated bits (one) that are used to indicate the occurrence of new multi-user service control information.

In a second embodiment in which a protocol overhead of the MTCH is used to indicate that new multi-user service control information will be present on the MCCH, the UE **102** is not given foreknowledge of start times of the new multi-user service control information. Instead, there are sufficient designated bits to indicate that the start time of the new multi-user service control information will occur and when it will occur. In one variation, the bit pattern of the designated bits indicate a count of incremental delays relative to some aspect of the protocol related to the occurrence of the bit pattern, such as the end of the data frame that includes the last repetition of the bit pattern that is needed for reliable detection by the UE **102**. The start time is thus indicated to occur by the amount of total delay 236 after that aspect of the bit pattern, as indicated by the count of incremental delays.

In a third embodiment in which a protocol overhead of the MTCH is used to indicate that new multi-user service control information will be present on the MCCH, the UE **102** is not given foreknowledge of a plurality of start times of the new multi-user service control information, and is not given any indication of delay time. Instead one designated bit in the protocol overhead of the MTCH is used to indicate to the UE **102** to begin monitoring "immediately" with respect to some aspect of the protocol related to the occurrence of the bit pattern, such as the end of the data frame that includes the last repetition of the bit pattern that is needed for reliable detection by the UE **102**. "Immediately" in this case means after some standard delay time provided for the UE **102** to make the detection and activate reception on the MCCH. This is illustrated by arrow **237** in **FIG. 2**. This embodiment imposes a restriction that the timing of the frames on the two physical channels be approximately synchronized, which may be difficult in some systems.

The above embodiments described with reference to **FIG. 2** may be more generally described as a method that is used in a communication system to transfer new multi-user service control information to a user equipment (UE) that affects a multi-user service being received by the UE on a multi-user traffic channel (MTCH). The methods comprise setting one or more designated bits within a protocol overhead of only the particular MTCH (the one that carries the affected multi-user service) into a bit pattern that provides an indication that the new multi-user service control information will be present on a multi-user control channel (MCCH).

In some embodiments, the designated bits that indicate when new multi-user service control information will occur on the MCCH may be included not in protocol overhead of the MTCH channel, but rather in a control portion of the physical channel carrying the MTCH that provides physical channel characterization. In some existing W-CDMA systems, this is described as the transport format combination indicators (TFCI). Further information on current implementation of TFCI is found in 3GPP Technical Specification 25.211 "Physical channels and mapping of transport channels onto physical channels (FDD)", and 3GPP Technical Specification 25.212 "Multiplexing and channel coding (FDD)". **FIG. 2** can serve to illustrate these embodiments, in which the control portions of the physical channel carrying the designated bits are now indicated by protocol portions **210, 211.** In these embodiments, what were identified as data frames **206-208** may now be better described as physical channel bit blocks rather than as data frames, because the physical channel bit blocks **206-208** contain traffic as well as control bits . Also, in these embodiments, the designated bits may not be exclusively used for new multi-user service control information purposes. For example, designated values of the designated bits in control portions of the physical channel may be used for new data indication as well as indication of the transport format.

In systems other than current releases of W-CDMA systems, one or more designated bits of the control portion of the physical channel carrying the MTCH that characterizes the physical channel may be able to be added to existing defined control bits for the physical channel for the purpose of providing the bit pattern, and may therefore be used in the same manner as the designated bits described above with reference to the protocol overhead embodiments described above. (Such dedication of designated bits would also be possible in new W-CDMA system definitions, but this may not be backwards compatible). In such embodiments, in which the designated bits are added and do not include already defined physical layer control bits, handling of the designated bits by the UE **102** would be implemented differently in the UE 102 than when using the protocol overhead of the MTCH because of the different network layer functions that would perform the monitoring of the designated bits. Differences may also exist in achieving diversity combination of the protocol portions from different base stations (different cells), and differences in the delay of the switchover to reception of the MCCH would exist, but the use of the designated bits for indicating that (and optionally, when) new multi-user service control information will occur would otherwise be essentially the same.

For compatibility with presently defined W-CDMA TFCI protocol portions, another approach to defining bit patterns without adding to the number of bits already designated for the TFCI protocol patterns is possible, when not all possible patterns of the TFCI bits are used. This approach is to define additional patterns that are not presently defined for the TFCI bits. New patterns are paired with old patterns so that both patterns in a pair provide the same meaning as the old patterns but to also provide new states that can be used to indicate that (and optionally, when) the new multi-user service control information will occur on the MCCH. For example, if four new patterns are defined that duplicate the meaning of four currently defined TFCI physical channel sets of characteristics, then they may be used to indicate that the new multi-user service control information will be transmitted, while still conveying the already defined set of physical channel characteristics, thus providing backward compatibility and invoking minimal changes to the functions that presently monitor the TFCI protocol portions. In general, N duplications of a transport format allow that transport format to be used to indicate N states of new multi-user service control information. Therefore, if a transport format is duplicated 4 times, when that transport format is used it may also indicate that new data is available at one of 4 delay times. The designated bits in this embodiment are the TFCI bits. This embodiment may be described as one in which at least two TFCIs are associated with one transport format and one of the at least two TFCIs also serves as the bit pattern that provides the indication that the new multi-user service control information will be present on the MCCH.

In accordance with the embodiments of the present invention in which the designated bits are within a protocol portion that is either the protocol overhead portion of the MTCH or the control portion of the physical channel carrying the MTCH, in addition to providing the functions described herein above, the bit patterns may provide information that allows the UE **102** to identify the MCCH that carries the new multi-user service control information. The MCCH identification information may include physical, transport, or logical channel identities, transport format, and the like. One manner by which this may be done, in accordance with some embodiments of the present invention, is that before the one or more designated bits are transmitted, identities of a plurality of MCCHs are transmitted. The designated bits that are transmitted in the protocol header of the MTCH, the control portion of the physical channel carrying the MTCH, or the paging channel (according to the particular embodiment of the present invention) then include a pattern that designates the MCCH.

Referring now to **FIG. 4**, a timing diagram of channel information in downlink channels of the radio communication system **100** is shown in accordance with embodiments of the present invention in which a multi-user paging channel **405** is used to indicate that new multi-user service control information will be present on the MCCH having physical channel **450**. In W-CDMA systems, this multi-user paging channel **405** is named the multimedia broadcast/multicast services indicator channel (MICH). A set of indicators **410** are transmitted repeatedly by the base station **106** for an indication period **415** in order to allow UEs that intermittently monitor the paging channel **405** to acquire at least one of the indicators **410**. In the W-CDMA system, this may be a paging discontinuous reception (DRX) cycle. The indicators **410** indicate to a set of UEs that are receiving a particular multi-user service that new multi-user service control information will be present on the MCCH. In accordance with these embodiments, receipt of an indicator by a UE, for example UE **102**, that indicates the particular multi-user service that UE **102** is presently receiving causes UE **102** to enable reception on the MCCH that has been previously identified to UE **102** as being associated with the MTCH. As an example, arrow **430** shows reliable reception of the indicator at the end of indicator **411**, after which UE **102** enables reception on the MCCH and maintains reception for a period **443,** which is a minimum period that assures reception of the new multi-user service control information. The one or more designated bits that are set into a bit pattern that provides an indication that the new multi-user service control information will be present on the MCCH are bits designated within the indicator of the multi-user paging channel.

The embodiments described above may have different impact on some aspects of system performance, which may depend on the system in which they are used. For W-CDMA systems, the embodiments described with reference to **FIG. 4**, which use a paging channel to carry the indication of new multi-user service control information, function similarly to existing paging functions and may be simpler to implement than other embodiments, but may cause more receiver resource, bandwidth, and delay issues than other embodiments. For example, the UE must monitor the paging channel during the receipt of the multi-user traffic, and the paging channel must be used for transmitting the indicator repetitiously during a relatively long time duration that allows the UE's to reduce their monitoring duty cycle.

Of the embodiments described with reference to **FIG. 2**, the ones that utilize a control portion of the physical channel of the MTCH are perhaps more complex to implement than the paging channel or medium access control (MAC) layer approaches, particularly when backwards compatibility is achieved by duplicating format indications using two bit patterns that are otherwise essentially unrelated except perhaps by length and location. Also, control portions of the physical channel are typically small, and so are unsuitable when multi-user service control information requires a large number of bits. However, the approach of using a control portion of a physical channel of the MTCH has some advantages. A first advantage is that detection of the indication would be quicker than the other approaches. A second advantage of using a control portion of the physical layer is that the approach allows for identification of the logical channel of the MTCH which, when there are more than one MTCH on a physical channel (as well as other cases when the format or content of the physical channel can vary), allows log-likelihood combining of macro-diverse symbols (symbols from two cells) on the MTCH carrying the multi-user traffic of interest to reduce signaling errors and thereby improves information throughput, even when information on the not-of-interest MTCH channel(s) is different in the two cells.

The embodiment that uses the MAC layer is a desirable technique in that the receiver resources of the UE are perhaps minimized in comparison to the other embodiments. However, there is a potential problem that arises when a UE performs signal combining of MTCH signals transmitted by two BTSs that have timing differences such that the indicator in a first encoded data frame transmitted by one of the BTSs is in a different state than the indicator transmitted by a second encoded data frame from another BTS that the UE is attempting to combine with the first encoded data frame. This situation may arise when new multi-user service control information is independently assigned to MCCH channels transmitted by each BTS (even when the same MCCH is used by each BTS). When the UE uses selection combining, the UE can, in many situations, determine that there most likely is a different state of the indicator in the two decoded data frames. However, when the channel decoder in the UE uses log-likelihood ratio (LLR) combining of the a-priori bit probabilities from the BTSs, a problem could arise because the indicator bits could have different states that would, in general, generate sets of differing encoded bits in the versions of the two encoded signals that are being LLR combined. This generation of differing bits in the encoded versions is a consequence of the types of encoding used in existing radio communication systems. For example, W-CDMA uses cyclical redundant coding (CRC) and turbo-code coding as error detection and forward error correction coding, respectively, for data frames. A one bit difference in two un-encoded data frames due to a single bit indicator of new multi-user service control information that has a different state in each un-encoded data frame can result in a plurality of bit differences after CRC encoding, and these differences can be multiplied and propagated due to the memory characteristics of the turbo-coding. Then, because LLR combining occurs before the data is fully decoded, the differences may cause LLR combining of many bits that differ between the two encoded data frames. Unique techniques that minimize the affect of different bit states of the designated bits in the unencoded data frames are described below.

Referring to **FIG. 5**, a block diagram of a data frame coding function **500** is shown, in accordance with some embodiments of the present invention. The block diagram illustrates coding functions that are typically performed by a processor under the control of sets of programmed instructions. These embodiments are implemented by using unique sets of such instructions in combination with conventional sets of program instructions, that in combination perform the described functions. In accordance with a first coding technique, indicator **515**, which comprises the one or more designated bits, is appended to the end of a data frame **501** comprising a MAC header **505** and information bits **510** by append function **520**, which generates data frame **525** having a MAC protocol overhead that comprises the MAC header **505** and indicator **515.** In related techniques, the indicator is inserted near the end of the data frame **501**, rather than exactly at the end. "The end" in this context means the portion of the data frame that is last encoded by the CRC coder **545** (i.e., is last encoded by the precoder **540**), and may be also referred to as the trailing end to distinguish it from what may at times be called the starting end, or beginning. Such bits near the trailing end may be described as trailing bits. The data frame **525**, including the designated bits, is pre-coded by a precoder **540** that comprises a CRC coder **545** as defined in 3GPP Technical Specification 25.212, "Technical Specification Group Radio Access Network; Multiplexing and channel coding (FDD)". A pre-coded data frame **535** is generated by the CRC coder **545** that includes the MAC header **505**, the information **510**, the indicator **515**, and CRC bits **530**. An interleaved pre-coded data frame **555** is generated by the turbo interleaver **550**. A channel encoder **560** comprises the turbo interleaver **550**, the constituent encoder 1, **565** and constituent encoder 2 **570**. The pre-coded data frame **535** and the interleaved pre-coded data frame **555** are coupled, respectively, to constituent encoders **565, 570** within channel encoder **560** and the outputs of the constituent encoders **565**, **570** are coupled to a modulation state encoder **575**. A modulated signal **580** is generated by the modulation state encoder **575**. In an example in which the indicator comprises one designated bit that is located at the end of data frame **525**, and the CRC comprises 24 bits as specified in 3GPP Technical Specification 25.212, "Technical Specification Group Radio Access Network; Multiplexing and channel coding (FDD)"adjacent to the designated bit, output bit streams from constituent encoder 1 **565** for two data frames **525** that differ only by the state of the indicator bit differ only in bits near the end of their bit streams that go to the modulation state encoder **575**. Due to the interleaving of the turbo interleaver **550**, however, a large portion of coded bits of two output bit streams for the same two data frames from constituent encoder 2 **570** will be different. A UE can decode the transmitted signal into decoded versions of the output bit streams from the constituent encoders **565, 570**. In this first coding technique, the UE would perform LLR combining using only the demodulated version of the output bit streams from constituent encoders 1 **565** received from two cells. The UE decoder would then use the combined LLR values along with each of the "uncombined" LLR values of the demodulated versions of the output bit streams from constituent encoders **570** and decode them separately, and when one of the decodes is successful, it passes along those bits to a higher layer process. Using some fairly common assumptions and in a typical radio environment, the additional required power for this first coding technique is about 0.5 dB more than an optimal combining system when equal signals are received from two cells having one indicator bit that has an opposite state in each signal. The precoder **540** in this example is a conventional precoder. This first coding technique may be described as locating or inserting the designated bits near the trailing end of an unencoded data frame. It will be appreciated that the best performance will generally be achieved when the designated bits are at the end and when they comprise one bit, but that substantial improvement is achieved with multiple bits (e.g., 2 to 4) by moving them closer to the trailing end of the data frame. Near, in the context of a WDCMA, means within 30 bits.

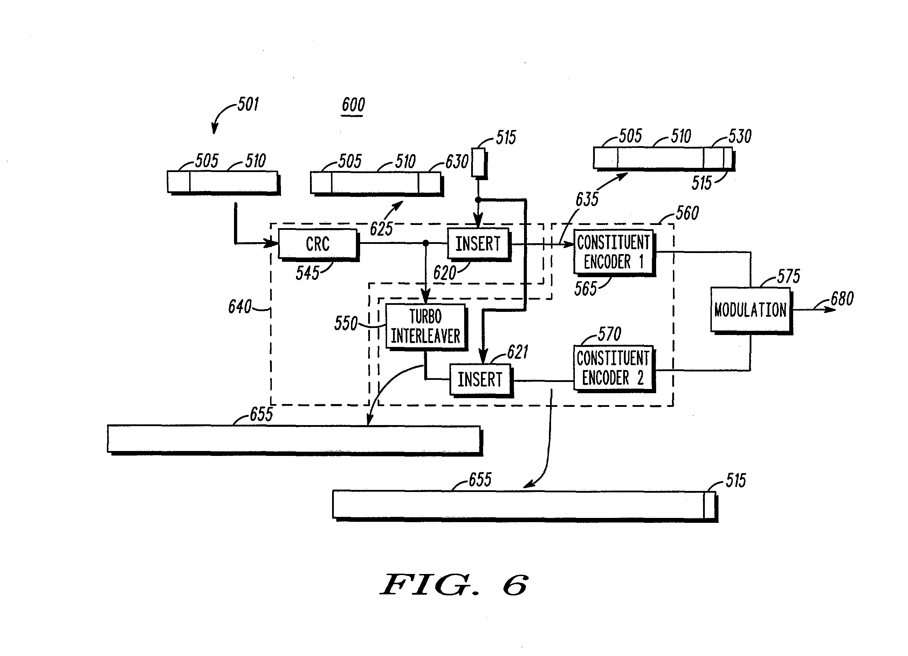

Referring to **FIG. 6**, a block diagram of a data frame coding function **600** is shown, in accordance with some embodiments of the present invention. In accordance with a second coding technique, the data frame coding function **600** comprises a precoder **640** and the channel encoder **560** of the above example. The precoder **640** comprises the CRC coder **545** and insert function **620**. The channel encoder **560** comprises the turbo interleaver **550**, insert function **621**, the constituent encoder 1, **565** and constituent encoder 2 **570**. An example is described using the same information supplied to the data frame coding function **500**. In this example, the data frame **501** is coupled to the CRC coder **545**, which generates pre-coded data frame **625** having the MAC header **505**, information **510**, and CRC bits **630**. The CRC bits are different than in the first technique because the designated bits **515** are not included in data frame **625**. The data frame **625** is coupled to the turbo interleaver **550** and a first insert function **620**. The turbo interleaver generates an interleaved pre-coded data frame **655** that is coupled to a second insert function **621**. The indicator **515** is appended to the end of pre-coded data frame **625** by first insert function **620** and is appended at the end of interleaved pre-coded data frame **655** by second insert function **621**, generating appended pre-coded data frame **635** and appended interleaved pre-coded data frame **655**. In related techniques, the indicator **515** is inserted near the end of the data frame **625** and interleaved data frame **655**, rather than exactly at the end, but these coded frames are still referred to as appended pre-coded data frame **635** and appended interleaved pre-coded data frame **655**. The appended pre-coded data frame **635** and the appended interleaved pre-coded data frame **655** are coupled to the constituent encoders **565** and **570**. A modulated signal **680** is generated by the modulation state encoder **575** from the outputs of the constituent encoders **565, 570.** In an example in which the indicator comprises one designated bit that is located at the ends of encoded data frame **625** and interleaved pre-coded data frame **655**, and the CRC **630** comprises 24 bits as specified in 3GPP Technical Specification 25.212, "Technical Specification Group Radio Access Network; Multiplexing and channel coding (FDD)", output bit streams from constituent encoder 1 **565** for two data frames **525** that differ only by the state of the indicator bit differ only in bits near the end of their bit streams that go to the modulation state encoder **575**. Because the indicator is not interleaved by the turbo interleaver **550** in this second coding techinque, only a small portion of the coded bits of two output bit streams for the same two data frames from constituent encoder 1 **565** and constituent encoder 2 **570** will be different when the designated bits are different. A UE can decode the transmitted signal into decoded versions of the output bit streams generated by the constituent encoders **565, 570** as described below. Thus, three steps are taken to achieve the encoding of the second coding technique:
1) The indicator is excluded from the CRC encoding.
2) The indicator is excluded from the turbo code interleaving.
3) The indicator is included at the end of the information block generated by the turbo coder.

This second coding technique may be more generically described as locating or inserting the designated bits near the trailing end of one or both of a precoded data frame and an interleaved pre-coded data frame. It will be appreciated that the best performance will generally be achieved when the designated bits are at the end and when they comprise one bit, but that substantial improvement is achieved with multiple bits (e.g., 2 to 4) by moving them closer to the trailing end of the data frame. Near, in the context of a WDCMA, means that all designated bits are within approximately 30 bits of the trailing end of the pre-coded or interleaved pre-coded data frame.

In the UE, the received bits are LLR combined and can be decoded using a single decoder, As a result, the decoded information bits other than the designated bits are the ones from the base station with the highest received signal to interference ratio. The additional required power for this second coding technique is less than 0.1 db when the channel bit error rate is less than 0.01, when equal signals are received from two cells having one indicator bit that has an opposite state in each signal.

Detecting the state(s) of the designated bit(s) is now described.

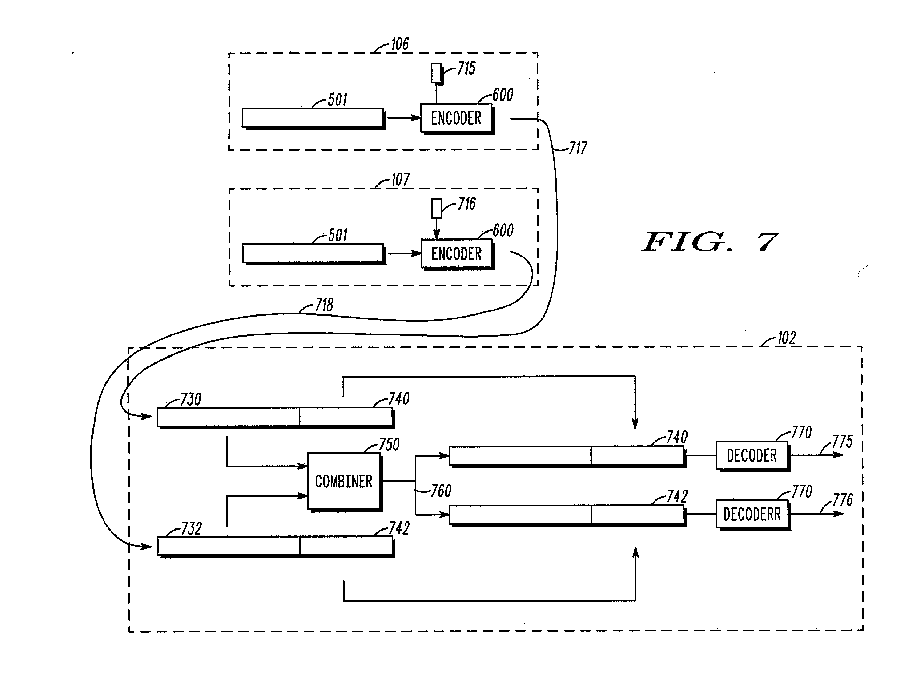

Referring to **FIG. 7**, a flow diagram of encoding/decoding is shown, in accordance with some embodiments of the present invention. The decoding technique is used for the second coding technique described above. Data frame **501**, comprising MAC header **505** and traffic data **510**, is combined with a set of designated bits **715** in BTS **106** using encoder **600**, as described above. The same data frame **501** is combined with a second set of designated bits **716** that are of the same length as the set **715**, but have, in this example, as least some bits with different states. In one embodiment, the set of bits is one bit. The channel encoded signals **717, 718** are received at a UE **102**, demodulated, and channel decoded as two bit sets with associated LLR values, one bit set from each BTS **106, 107.** There is a leading portion **730, 732** of each bit set, which comprises bits that are not affected by changes in bit states of the designated bits, and there is a trailing portion **740, 742** of bits that may be affected by the bit states of the designated bits. A combiner **750** of the UE **102** performs LLR combining of the leading portions **730, 732** from the BTSs **106, 107,** generating a combined leading portion, but retains the LLR values of the trailing portions **740, 742.** (In order to use a standard combiner function, the combiner **750** may of course also LLR combine the trailing portions, but the result would not be used). The trailing portions **740, 742** are each appended separately to the combined leading portion **760**, and the two resulting complete bit streams are separately decoded by a decoder **770** to generate complete decoded data frames **775, 776** that include best estimates of the states of designated bits **715, 716** for each BTS **106, 107**.

It will be appreciated that the same approaches for minimizing the impact of different states of designated bits when the same data frames are received from two cells that differ only in their designated bits can accomplish similar benefits when used in radio communication systems other than W-CDMA; that is, to insert the designated bits either near the end of unencoded data frames or pre-coded data frames.

The techniques of the present invention described above for cellular systems that fall within the class of W-CDMA systems specified by the 3GPP standards group may be applicable to wireless radio systems of other types that can support multi-user traffic on a broadcast or multicast basis. Examples may be the class of 3G systems known as cdma2000 and those known as UWC-136.

It will be appreciated the base stations **106-108**, the fixed network **104**, and the UEs **102, 103** comprise one or more conventional processors and unique and conventional sets of stored program instructions that control the one or more processors to implement some or all of the functions described herein. As such, the functions may be interpreted as steps of a method. Alternatively, the functions could be implemented by a state machine that has no stored program instructions, in which each function or some combinations of certain of the functions are implemented as custom logic. Of course, a combination of the two approaches could be used. Thus, both methods and apparatuses have been described herein.

In the foregoing specification, the invention and its benefits and advantages have been described with reference to specific embodiments. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention. The benefits, advantages, solutions to problems, and any element(s) that may cause any benefit, advantage, or solution to occur or become more pronounced are not to be construed as a critical, required, or essential features or elements of any or all the claims.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

A "set" as used herein, means a non-empty set (i.e., for the sets defined herein, comprising at least one member). The term "another", as used herein, is defined as at least a second or more. The terms "including" and/or "having", as used herein, are defined as comprising. The term "coupled", as used herein with reference to electro-optical technology, is defined as connected, although not necessarily directly, and not necessarily mechanically. The term "program", as used herein, is defined as a sequence of instructions designed for execution on a computer system. A "program", or "computer program", may include a subroutine, a function, a procedure, an object method, an object implementation, an executable application, an applet, a servlet, a source code, an object code, a shared library/dynamic load library and/or other sequence of instructions designed for execution on a computer system. It is further understood that the use of relational terms, if any, such as first and second, top and bottom, and the like are used solely to distinguish one entity or action from another entity or action without necessarily requiring or implying any actual such relationship or order between such entities or actions.

## Claims

1. A method used in a communication system to transfer to a user equipment (UE) new multi-user service control information that affects a multi-user service being received by the UE, comprising:
selecting by a fixed network a multi-user control channel (MCCH) to convey the new multi-user service control information to the UE;
transmitting by the fixed network an identity of the MCCH;
receiving by the UE the identity of the MCCH;
determining by the fixed network an MTCH that is carrying the affected multi-user service;
setting by the fixed network one or more designated bits within a protocol portion that is one of a protocol overhead of the MTCH, a control portion of a physical channel carrying the MTCH, and an indicator of a paging channel into a bit pattern that provides an indication that the new multi-user service control information will be present on the MCCH;
transmitting by the fixed network the new multi-user service control information on the MCCH;
monitoring by the UE the one or more designated bits;
detecting by the UE the bit pattern; and
activating reception by the UE on the MCCH in response to the indication.

2. A method used in a communication system to transfer new multi-user service control information to a user equipment (UE) that affects a multi-user service being received by the UE on a multi-user traffic channel (MTCH), comprising:
setting one or more designated bits within a protocol overhead of only the particular MTCH into a bit pattern that provides an indication that the new multi-user service control information will be present on a multi-user control channel (MCCH).

3. The method according to claim 2, further comprising:
selecting a multi-user control channel (MCCH) to convey the new multi-user service control information to user equipments;
determining a multi-user traffic channel (MTCH) that is carrying the affected multi-user service;

4. The method according to claim 2, wherein the communication system is a W-CDMA system and the protocol overhead includes a medium access control header.

5. The method according to claim 2, wherein the bit pattern indicates a delay after which the new multi-user service control information will be present on the MCCH.

6. The method according to claim 2, wherein the one or more designated bits are located near a trailing end of an unencoded data frame.

7. The method according to claim 6, wherein the one or more designated bits are located at the trailing end of the one of the unencoded data frame and the pre-coded data frame.

8. The method according to claim 2, wherein the one or more designated bits are located near a trailing end of one or both of a pre-coded data frame and an interleaved pre-coded data frame.

9. The method according to claim 8, wherein the one or more designated bits are located at the trailing end of the one or both of the pre-coded data frame and the interleaved pre-coded data frame.

10. A method used in a communication system to transfer new multi-user service control information to a user equipment (UE) that affects a multi-user service being received by the UE on a multi-user traffic channel (MTCH), comprising:
setting one or more designated bits within a control portion of only the particular physical channel carrying the MTCH into a bit pattern that provides an indication that the new multi-user service control information will be present on a multi-user control channel (MCCH).

11. The method according to claim 10, further comprising:
selecting a multi-user control channel (MCCH) to convey the new multi-user service control information to user equipments;
determining a physical channel carrying a multi-user traffic channel (MTCH) that is carrying the affected multi-user service;.

12. The method according to claim 10, wherein the communication system is a W-CDMA system and the control portion is a transport format combination indicator (TFCI).

13. The method according to claim 12, wherein at least two TFCIs are associated with one transport format and one of the at least two TFCIs also serves as the bit pattern that provides the indication that the new multi-user service control information will be present on the MCCH.

14. The method according to claim 10, wherein the bit pattern indicates a delay after which the new multi-user service control information will be present on the MCCH.

15. A method used in a communication system to transfer new multi-user service control information to a user equipment (UE) that affects a multi-user service being received by the UE on a multi-user traffic channel (MTCH), comprising:
setting one or more designated bits of an indicator of a multi-user paging channel into a bit pattern that provides an indication that the new multi-user service control information will be present on a multi-user control channel (MCCH).

16. The method according to claim 15, wherein the communication system is a W-CDMA system and the multi-user paging channel is a multimedia multicast/broadcast services indicator channel (MICH).

17. The method according to claim 15, wherein the bit pattern indicates a delay after which the new multi-user service control information will be present on the MCCH.

18. A method used in a user equipment (UE) of a communication system to acquire new multi-user service control information that affects a multi-user service being received by the UE on an multi-user traffic channel (MTCH), wherein the new multi-user service control information will be transmitted on a multi-user control channel (MCCH), comprising:
determining the identity of the MCCH;
monitoring one or more designated bits within a protocol portion that is one of a protocol overhead of the MTCH, a control portion of a physical channel carrying the MTCH, and an indicator of a paging channel, to detect a bit pattern that provides an indication that the new multi-user service control information will be present on the MCCH; and
activating reception on the MCCH in response to the indication.

19. The method according to claim 18, wherein the protocol overhead includes a medium access control (MAC) layer header of a W-CDMA traffic channel.

20. The method according to claim 18, wherein the control portion of the physical channel carrying the MTCH consists of transport format combination indicators (TFCI) of a W-CDMA physical channel.

21. The method according to claim 20, wherein at least two TFCIs are associated with one transport format and one of the at least two TFCIs also serves as the bit pattern that provides the indication that the new multi-user service control information will be present on the MCCH.

22. The method according to claim 18, wherein the indicator of the paging channel is an indicator in a multimedia broadcast/mulitcast indicator channel of a W-CDMA system.

23. The method according to claim 18, wherein the MTCH and MCCH are on different physical channels.

24. The method according to claim 18, wherein the identity of the MCCH is received by the UE in a signaling message.

25. The method according to claim 18, wherein the determining of the identity of the MCCH comprises receiving, before the bit pattern is detected, identities of a plurality of MCCHs, and wherein the one or more designated bits in the protocol portion include a pattern that identifies the MCCH.

26. The method according to claim 18, wherein the MCCH is identified to the UE by a signaling message.

27. The method according to claim 18, further comprising monitoring a predetermined number of repetitions of said one or more designated bits to generate a reliable detection of the bit pattern.

28. The method according to claim 18, wherein the one or more designated bits consist of one bit, and wherein the bit pattern is a designated state of the one bit, and wherein the activation of reception on the MCCH is performed after the designated state is detected.

29. The method according to claim 16, wherein potential start times for new multi-user service control information have been identified to the UE, and wherein the activation of reception on the MCCH is performed near one of the potential start times.

30. The method according to claim 18, wherein the activation of reception on the MCCH is performed immediately.

31. The method according to claim 18, further comprising maintaining reception on the MCCH for a predetermined minimum duration.

32. The method according to claim 18, wherein the one or more designated bits also indicate a minimum delay before the new multi-user service control information will be present on the MCCH, and wherein the reception on the MCCH is activated approximately at the minimum delay after the bit pattern is detected.

33. The method according to claim 32, further comprising maintaining reception on the MCCH for a predetermined minimum duration.

34. A method used in a fixed network of a communication system to indicate new multi-user service control information that affects a multi-user service, comprising:
selecting a multi-user control channel (MCCH) to convey the new multi-user service control information to user equipments;
determining a multi-user traffic channel (MTCH) that is carrying the affected multi-user service;
setting one or more designated bits within a protocol portion that is one of a protocol overhead of the MTCH, a control portion of a physical channel carrying the MTCH, and an indicator of a paging channel into a bit pattern that provides an indication that the new multi-user service control information will be transmitted on the MCCH; and
transmitting the new multi-user service control information on the MCCH after the bit pattern is transmitted.

35. The method according to claim 34, wherein the protocol overhead includes a medium access control (MAC) layer header of a W-CDMA traffic channel.

36. The method according to claim 34, wherein the control portion of the physical channel carrying the MTCH consists of transport format combination indicators (TFCI) of a W-CDMA physical channel.

37. The method according to claim 36, wherein at least two TFCIs are associated with one transport format and one of the at least two TFCIs also serves as the bit pattern that provides the indication that new multi-user service control information will be present on the MCCH.

38. The method according to claim 34, wherein the paging channel is a multimedia broadcast/multicast indicator channel of a W-CDMA system.

39. The method according to claim 34, wherein the MTCH and MCCH are on different physical channels.

40. The method according to claim 34, further comprising transmitting to the UE an identity of the MCCH.

41. The method according to claim 40, wherein the identity of the MCCH is transmitted by the base station before the new multi-user service control information is transmitted on the MCCH.

42. The method according to claim 40, wherein the identity of the MCCH is transmitted by the base station in a signaling message.

43. The method according to claim 40 wherein the transmitting of the identity of the MCCH comprises transmitting, before the one or more designated bits are transmitted, identities of a plurality of MCCHs, and wherein the bits that are transmitted in the protocol portion include a pattern that identifies the MCCH.

44. The method according to claim 43, wherein the plurality of MCCHs are identified to the UE by a signaling message.

45. The method according to claim 34, further comprising transmitting a predetermined number of repetitions of the one or more designated bits to facilitate reliable detection of the bit pattern.

46. The method according to claim 34, wherein the one or more designated bits consist of one bit, and wherein the bit pattern is a designated state of the one bit, and wherein the one bit is changed to the designated state to indicate that the new multi-user service control information is to be transmitted on the MCCH.

47. The method according to claim 34, wherein a plurality of potential start times for new multi-user service control information are identified to the UE.

48. The method according to claim 34, wherein the one or more designated bits indicate a minimum delay before the new multi-user service control information will be present on the MCCH.
